# EUROPEAN PATENT APPLICATION

(11) **EP 4 840 533 A1**
(43) Date of publication of application: **18.11.2026**
(21) Application number: 25842573.5
(22) Date of filing: 15.01.2025
(51) Int. Cl.: B01D 67/00

(54) **METHOD FOR COATING WITH WATER-DISPERSIBLE POLYURETHANE FOR ADJUSTING PORE SIZE OF UF HOLLOW FIBER MEMBRANE, AND UF HOLLOW FIBER MEMBRANE PRODUCED THEREBY**

(30) Priority: 31.12.2024 KR 20240201845
(71) Applicant: Para Co., Ltd., Hwaseong-si, Gyeonggi-do 18542 (KR)
(72) Inventor: YOON, Ho-sung, Gyeonggi-do 18542 (KR)
(74) Representative: Lambacher, Michael
(86) International application number: PCT/KR2025/000923
(87) International publication number: WO 2026/146699

(57) **Abstract**

The present invention relates to a method of coating a polyurethane dispersion (PUD) on an ultrafiltration (UF) hollow fiber membrane, and a UF hollow fiber membrane prepared thereby. The polyurethane dispersion (PUD) is coated on the UF hollow fiber membrane to reduce the pore size of the UF hollow fiber membrane, thereby maximizing foreign substance removal performance when applied to a water purifier filter.

## Description

### TECHNICAL FIELD

The present invention relates to a method of coating a water-dispersible polyurethane or a polyurethane dispersion (PUD) on an ultrafiltration (UF) hollow fiber membrane for controlling the pore size of the UF hollow fiber membrane and to a UF hollow fiber membrane prepared thereby, and more particularly, to a method of coating a polyurethane dispersion (PUD) on a UF hollow fiber membrane so as to reduce the pore size of the UF hollow fiber membrane, thereby maximizing filtration performance against foreign substances when applied to a water purifier filter, and to a UF hollow fiber membrane prepared thereby.

### BACKGROUND ART

Water purification filters play an important role in improving water quality and removing foreign substances, and UF hollow fiber membranes that are used therefor provide high-efficiency filtration performance due to their fine pore structures. UF hollow fiber membranes are mainly prepared based on polymeric materials, and water purification performance can be improved by adjusting the pore size of the membranes. However, conventional UF hollow fiber membranes often have non-uniform pore sizes or irregular pore structures formed during preparing, which may limit filtration performance. In order to address such problems, various studies have been conducted on coating technologies in which an additional coating layer is formed on the surface of the UF hollow fiber membrane using a polymer material to uniformly control the pore size of the UF hollow fiber membrane, thereby improving filtration performance.

In particular, a polyurethane dispersion (PUD) is used as a coating material and has excellent water dispersibility, mechanical strength, and chemical resistance. For this reason, the polyurethane dispersion (PUD) is considered to be a suitable material for improving performance of the UF hollow fiber membrane. The polyurethane dispersion (PUD) is in a form in which a polyurethane polymer is dispersed in water, and can combine hydrophilicity and hydrophobicity in a balanced manner, thereby providing a uniform coating on a surface of the membrane. Accordingly, applications are possible in which the pore size of the surface of the UF hollow fiber membrane is controlled and durability is increased, while filtration efficiency is enhanced.

However, conventional coating technologies using a polyurethane dispersion (PUD) have limitations in more precisely and uniformly controlling a pore size of a UF hollow fiber membrane. For example, depending on a selection of a coating material or a coating method, uniformity of a membrane surface may be degraded, or durability of a coating layer may not be sufficiently ensured. Accordingly, development of a coating material and a coating process suitable for a surface of a UF hollow fiber membrane is required. There is therefore a need for technological innovation to improve filtration performance while simultaneously satisfying economic efficiency and durability of the UF hollow fiber membrane.

The present invention proposes a technology for synthesizing a polyurethane dispersion (PUD) having high water dispersibility using a polycarbonate diol and an isophorone diisocyanate (IPDI), coating the polyurethane dispersion on a UF hollow fiber membrane to precisely control a pore size thereof, and improving performance of the UF hollow fiber membrane. In particular, by introducing hydrophilicity into the polyurethane dispersion (PUD) using dimethylolpropionic acid (DMPA) and triethylamine (TEA), or by employing processes such as squeezing and hot-air drying in a coating process, the present invention provides a technology capable of preventing blocking between UF hollow fiber membranes and forming a uniform coating layer, thereby solving problems associated with the conventional technology.

### DISCLOSURE OF INVENTION

### TECHNICAL PROBLEM

Accordingly, the present invention has been made to solve the aforementioned problems occurring in the prior art, and it is an object of the present invention to provide a UF hollow fiber membrane suitable for high-performance filtering applications such as a water purification filter by effectively controlling the pore size of the UF hollow fiber membrane. In particular, the present invention is indented to remarkably improves foreign substance removal performance and divalention filtration performance by forming a uniform coating layer on a surface of the UF hollow fiber membrane using a polyurethane dispersion (PUD) so as to reduce the pore size of the membrane surface. Further, the present invention is intended to prevent formation of a non-uniform coating layer and peeling of a coating layer, which may occur in conventional coating methods, and to implement functions such as reducing conductivity of an aqueous solution and controlling permeate flux of the UF hollow fiber membrane. Further, the present invention aims to solve issues related to eco-friendliness of a preparing process and prevention of blocking between UF hollow fiber membranes through use of an environmentally friendly catalyst and a hot-air drying process, and to realize optimal coating performance by introducing a precise dilution ratio.

### TECHNICAL SOLUTION

To achieve the above objects, the present invention provides a method of coating a UF hollow fiber membrane with a polyurethane dispersion (PUD) for controlling the pore size of the UF hollow fiber membrane to improve filtration performance, and a UF hollow fiber membrane prepared by the method.

Hereinafter, the present invention will be described in detail.

A method of preparing a hollow fiber membrane by a wet spinning method using polysulfone and polyphenylsulfone as polymer resins according to the present invention will be described below.

### Preparation of Spinning Dope

First, a polymer solution (dope) is prepared by mixing polysulfone and polyphenylsulfone using N-methyl-2-pyrrolidone (NMP) as a solvent.

At this time, additives are used to adjust hydrophilicity and pore size of the hollow fiber membrane, and examples of the additives may include water, polyethylene glycol (PEG) 200, and polyvinylpyrrolidone (PVP). Such additives are added to the dope to adjust viscosity of the spinning dope, and the viscosity of the prepared spinning dope is 500 to 50,000 cps, preferably 800 to 30,000 cps at 25°C.

The viscosity of the spinning dope is adjusted to be suitable for desired membrane properties, and may vary depending on a mixing ratio of the polysulfone-based resin and the solvent. A person having ordinary skill in the art may appropriately set and use the mixing ratio within the technical scope of the present invention.

### Preparation of Internal coagulant

The internal coagulant (or bore fluid) is used to form the lumen and internal pores of the hollow fiber membrane, and is prepared by mixing water as a non-solvent, and N,N-dimethylacetamide (DMAc) as a solvent. In order to enlarge the internal pore size of the hollow fiber membrane, it is preferable that the ratio of the non-solvent to the solvent in the internal coagulant be set to 10:90 to 1:99 by weight (non-solvent : solvent). If the solvent content is less than 90 wt%, formation of a reticular (mesh-like) structure on the inner lumen surface may become difficult. Conversely, if the solvent content exceeds 99 wt%, formation of the hollow fiber membrane may become unstable. The viscosity of the prepared internal coagulant is set in the range of 0.5 to 100 cps at 25 °C.

### Preparation of Hollow Fiber Membrane

The spinning dope is extruded into air together with an internal coagulant through a spinneret having a double-tubular nozzle. In this process, the internal coagulant passes through a central portion of the spinning dope to form a hollow structure, and the spinning dope starts to coagulate from an inner surface of the lumen.

Thereafter, the spun dope is dipped in an external coagulant. Examples of the external coagulant may include water, N-methyl-2-pyrrolidone (NMP), N,N-dimethylformamide (DMF), N,N-dimethylacetamide (DMAc), chloroform, tetrahydrofuran (THF), polyethylene glycol, propylene glycol, ethylene glycol, glycerin, or a mixture thereof. The external coagulant induces rapid coagulation of the spinning dope, and as a result a hollow fiber membrane having a separation and filtration layer and a hollow structure is formed.

It is preferable to adjust a distance between a discharge port of the spinneret and an external coagulation bath to control a phase separation rate of the spinning dope and the internal coagulant, so that structural properties and pore distribution of the hollow fiber membrane can be precisely controlled.

As such, the hollow fiber membrane prepared according to the above-described method forms, on an outer surface thereof, a separation and filtration layer composed of fine pores. A reticular structure is formed inside the separation and filtration layer. As the structure extends toward a hollow direction, a pore size gradually increases, and in particular, large pores having a size of 10 to 200 µm are present on an inner lumen surface, thereby providing high water permeability and pressure resistance suitable for an outside-pressure operating mode. More specifically, an average diameter of internal circular pores on the inner lumen surface is set to 30 to 100 µm, which is suitable for water-treatment separation membrane applications requiring ultrafiltration and microfiltration. By virtue of such structural properties, the hollow fiber membrane of the present invention provides excellent separation performance capable of efficiently removing impurities having a size of 5.0 µm or less.

Next, a polyurethane having high water dispersibility is synthesized by reacting a polycarbonate diol with an isophorone diisocyanate (IPDI) to obtain a polyurethane dispersion (PUD). In this step, the reaction between the polycarbonate diol and the isophorone diisocyanate forms a polyurethane dispersion (PUD) exhibiting high dispersibility and hydrophilicity, thereby enabling stable control of the pore size of the UF hollow fiber membrane.

The polyurethane dispersion (PUD) used in the present invention is designed to have a low glass transition temperature (Tg). When a polyurethane dispersion (PUD) having a high glass transition temperature is used, blocking between coated UF hollow fiber membranes may occur after coating, which may negatively affect product quality and performance. Therefore, in the present invention, a polyurethane dispersion (PUD) having a low glass transition temperature is synthesized and applied to coating of the hollow fiber membrane, thereby maximizing foreign substance removal performance.

Major raw materials and processes for preparing a polyurethane dispersion (PUD) that provides water dispersibility while maintaining the specific elasticity and durability of polyurethane according to the present invention are as follows:

### Main Raw Material Composition

### ① Polyol

A polyol determines physical properties of a polymer depending on its molecular weight. When the molecular weight of the polyol is large, fluidity is improved but its adhesion strength is weakened, whereas when its molecular weight is small, hardness is excessively increased. Accordingly, in the present invention, a polycarbonate diol having a molecular weight of 1000 g/mol is used, thereby obtaining a polyurethane dispersion (PUD) having a low glass transition temperature (Tg) and excellent elasticity. That is, the glass transition temperature (Tg) of the polyurethane dispersion (PUD) is designed to be low so that a coated polyurethane dispersion (PUD) layer has flexibility. Such a low glass transition temperature (Tg) design prevents deformation even under stress variations caused by water flow during filtration of the UF hollow fiber membrane, thereby ensuring sustainable and stable performance.

### ② Polyisocyanate

In the present invention, an isophorone diisocyanate (IPDI), which is an aliphatic isocyanate, is used in the synthesis of polyurethane in order to maintain yellowing resistance and transparency. IPDI belongs to the aliphatic isocyanate family and provides non-yellowing properties, thereby maintaining excellent optical transparency even under long-term use conditions. In particular, IPDI has the property of enabling the glass transition temperature (Tg) of the polyurethane structure to be controlled at a low level, which corresponds to a primary design objective of the polyurethane dispersion (PUD) synthesized in the present invention. The low glass transition temperature (Tg) prevents blocking between coated UF hollow fiber membranes and contributes to securing both filtration performance and physical stability. Accordingly, IPDI is adopted as a key raw material that plays a critical role in controlling physical properties and improving performance of the polyurethane dispersion synthesized in the present invention.

### ③ Hydrophilic Monomer

In order to impart water dispersibility to the polyurethane dispersion (PUD), dimethylolpropionic acid (DMPA) is added thereto.

### ④ Catalyst

Dibutyltin dilaurate (DBTDL), which has been conventionally used, is prohibited due to environmental concerns. Accordingly, an environmentally friendly bismuth-based catalyst is used as a substitute.

### ⑤ Neutralizer

Triethylamine (TEA) is used to neutralize the hydrophilic carboxylic acid groups of dimethylolpropionic acid (DMPA).

### ⑥ Solvent

Methyl ethyl ketone (MEK) is used as a solvent for controlling dispersibility and reaction rate during the initial synthesis process of the polyurethane dispersion (PUD). The use of methyl ethyl ketone (MEK) plays an important role in increasing uniformity of the polyurethane dispersion (PUD) synthesis reaction and maintaining quality stability of the coating solution through control of the reaction rate.

### ⑦ Distilled Water

High-purity deionized water is used in the reaction and dispersion processes.

### Preparation Process

### ① Prepolymer Synthesis

A reactor is set under a nitrogen (N₂) atmosphere to prevent oxidation, and the reaction is carried out at a temperature of 60 to 80°C with a stirring speed of 700 to 800 rpm.

A polycarbonate diol and an isophorone diisocyanate (IPDI) are introduced so that an NCO ratio is adjusted to 1.1 to 1.2 to form appropriate crosslinking while allowing the reaction to proceed.

To impart hydrophilicity to the polyurethane dispersion (PUD), dimethylolpropionic acid (DMPA) is added thereto at 70°C to introduce hydrophilic groups (-COOH) into a polymer structure, and the mixture is sufficiently stirred to ensure a uniform reaction. Such hydrophilicity improves the coating performance of the UF hollow fiber membrane, thereby securing water-purification and filtration efficiency as well as pore size controllability of the UF hollow fiber membrane.

A bismuth catalyst (concentration: 0.05 to 0.1%) is added to control a reaction rate, and an NCO content is measured by the dibutylamine method to confirm completion of the reaction.

### ② Neutralization

To ensure water dispersibility (of the polyurethane dispersion (PUD)), triethylamine (TEA) is added (to dimethylolpropionic acid (DMPA)) as a neutralizing agent at 40 to 50°C to neutralize carboxylic acid groups of dimethylolpropionic acid (DMPA), thereby adjusting a pH to 7 to 8. By stabilizing carboxyl groups of dimethylolpropionic acid (DMPA) using triethylamine (TEA), water stability of the polyurethane dispersion (PUD) is secured, an ideal viscosity is maintained during surface coating of the UF hollow fiber membrane, and a high-quality coating layer is obtained.

### ③ Dispersion

Distilled water is gradually added while stirring the prepared prepolymer at 500 to 800 rpm to control a particle size to 50 to 200 nm. Dispersion stability is evaluated by checking whether particle aggregation occurs.

### ④ Chain Extension

Ethylene diamine (EDA) is slowly added at 30 to 40°C to increase the molecular weight of the polymer, thereby inducing chain extension. This process affects the transparency and mechanical strength of the polyurethane dispersion (PUD).

### ⑤ Solvent Removal

The Ethylene diamine (EDA) used is removed through reduced-pressure distillation or heat treatment to minimize a volatile organic compound (VOC) content. In this process, after additional neutralizing agent and distilled water are added for dilution, methyl ethyl ketone (MEK) is removed through heating and a vacuum pump.

### ⑥ Solid Content Adjustment

Additional distilled water is added to the polyurethane dispersion (PUD) to adjust a final viscosity to 50 to 200 mPa·s and a solid content to 30 to 40%.

The polyurethane dispersion (PUD) prepared according to the above-described method provides high transparency and excellent durability by precisely controlling particle size, dispersion stability, and the chain extension process.

Next, the polyurethane dispersion (PUD) obtained by synthesis is diluted with water to form a coating solution suitable for application to a UF hollow fiber membrane. In this step, dilution is carried out at an appropriate ratio of the polyurethane dispersion (PUD) to water in order to obtain a coating solution having viscosity and adhesion properties suitable for a surface of the UF hollow fiber membrane, and the diluted solution enables uniform application onto the surface of the UF hollow fiber membrane. Through this process, a basis for more precisely controlling pore channels is provided. Meanwhile, in coating the UF hollow fiber membrane, it is important to use a coating solution prepared by diluting the polyurethane dispersion (PUD) with water at a weight ratio of 1:450 in order to maximize coating efficiency. Such a ratio is adjusted to form a uniform and thin coating layer on the UF hollow fiber membrane and provides both durability and filtration capability of the coating layer.

Thereafter, as a method of imparting functionality by uniformly coating the polyurethane dispersion (PUD) onto the surface of the hollow fiber membrane, the coating process is carried out as follows.

### Coating Process

The prepared hollow fiber membrane is dipped in the coating solution to apply the polyurethane dispersion (PUD) onto a surface of the hollow fiber membrane. Viscosity and concentration of the coating solution may be adjusted depending on pore size and surface characteristics of the hollow fiber membrane. In the present invention, the solid content of the polyurethane dispersion (PUD) is set to 30 to 40% to form a uniform coating layer.

### Twisting and Squeezing Process of the Hollow Fiber Membrane

In order to allow the polyurethane dispersion (PUD) to uniformly penetrate into pores of the hollow fiber membrane, a twisting and squeezing process is performed manually on the coated UF hollow fiber membrane.

### Drying Process

The UF hollow fiber membrane subjected to the twisting and squeezing process is dried at 70°C for 4 hours using a hot-air drying method. During this process, moisture and residual solvent within the coating layer are removed, thereby forming a coating layer having improved strength and stability.

The coating layer dried as described above is uniformly formed on the surface of the hollow fiber membrane and enhances durability and chemical resistance against external environments. In addition, the coating layer not only improves filtration performance by controlling pore size and pore distribution, but also imparts hydrophilicity and antifouling properties.

Further, by performing hot-air drying at 70°C for 4 hours under the above-described conditions, coalescence or adhesion of the UF hollow fiber membranes can be prevented. Accordingly, physical independence between individual UF hollow fiber membranes is maintained, and deformation or damage of the coated layer is minimized.

The final pore size of the UF hollow fiber membrane is controlled within a range of 0.01 to 0.1 µm. By designing a narrow pore size distribution, strong filtration performance capable of effectively removing fine particles and foreign substances is provided. This results in improved water purification capability and stable filtration efficiency compared to conventional UF hollow fiber membranes.

In addition, surface SEM analysis of the UF hollow fiber membrane provided in the present invention confirms that, after coating, the membrane is composed of a uniform layer, thereby demonstrating optimal performance as a filter.

The UF hollow fiber membrane coated according to the above-described method is designed to enable divalent ion filtration and exhibits a characteristic of reducing electrical conductivity. Accordingly, the UF hollow fiber membrane can play an important role in water purification applications.

Finally, the present invention is characterized in that, in forming the coating layer of the UF hollow fiber membrane, a bismuth-based catalyst is used instead of a tin-based catalyst in consideration of environmental friendliness during synthesis. By virtue of this approach, harmful environmental pollution is reduced and a sustainable, eco-friendly technology is realized.

### ADVANTAGEOUS EFFECTS

The present invention configured as described above provides advanced water purification and filtration functionality by coating the UF hollow fiber membrane with the polyurethane dispersion (PUD) to control pore size thereof and enhance foreign substance removal performance.

In addition, the polyurethane dispersion (PUD) obtained using the polycarbonate diol and the isophorone diisocyanate (IPDI) allows the pore size of the UF hollow fiber membrane to be controlled within a range of 0.01 to 0.1 µm, thereby enabling high-purity water treatment requiring fine filtration. Furthermore, hydrophilic properties of dimethylolpropionic acid (DMPA) introduced during the coating process and neutralization of carboxylic acid groups of DMPA using triethylamine (TEA) maximize water treatment efficiency of the UF hollow fiber membrane.

The present invention also maintains stability of the coating solution by using methyl ethyl ketone (MEK) as a solvent to control the reaction rate and dispersibility of the polyurethane dispersion (PUD), and contributes to high coating quality and prevention of coating delamination by uniformly forming a single coating layer on the UF hollow fiber membrane.

In addition, by establishing the twisting and squeezing process for the coated hollow fiber membrane and hot-air drying conditions (70°C for 4 hours), membrane sticking caused by contact between UF hollow fiber membranes is prevented, and a uniform coating surface (confirmed by SEM analysis) is produced, thereby improving filter quality and durability.

The UF hollow fiber membrane of the present invention ensures flexibility and stability through a polyurethane dispersion (PUD) coating layer designed to have a low glass transition temperature (Tg) in the coating process, thereby minimizing performance changes even during long-term use.

Moreover, by balancing hydrophilicity of the UF hollow fiber membrane with hydrophobicity of the polyurethane dispersion (PUD) coating layer, high ion rejection rate and permeate flux control capability are achieved, thereby enabling application to general water purification filters and high-performance desalination filtration systems.

Furthermore, the present invention reduces electrical conductivity of the coated UF hollow fiber membrane, thereby ensuring stable water quality in electrolyte treatment and water treatment systems. In addition, the present invention provides an environmentally-friendly preparing process by employing the bismuth-based catalyst instead of the tin-based catalyst used in conventional UF filter preparing processes.

### BRIEF DESCRIPTION OF THE DRAWINGS

FIG. 1 shows SEM photomicrographs (150× magnification) of the surface of a UF hollow fiber membrane before and after coating with a polyurethane dispersion (PUD);
FIG. 2 shows SEM photomicrographs (500× magnification) of the surface of a UF hollow fiber membrane before and after coating with a polyurethane dispersion (PUD);
FIG. 3 shows SEM photomicrographs (2,000×magnification) of the surface of a UF hollow fiber membrane before and after coating with a polyurethane dispersion (PUD);
FIG. 4 shows SEM photomicrographs (400× magnification) of the surface of a UF hollow fiber membrane before and after coating with a polyurethane dispersion (PUD);
FIG. 5 shows SEM photomicrographs (1,000× magnification) of the surface of a UF hollow fiber membrane before and after coating with a polyurethane dispersion (PUD); and
FIG. 6 shows SEM photomicrographs (5,000× magnification) of the surface of a UF hollow fiber membrane before and after coating with a polyurethane dispersion (PUD).

### BEST MODE FOR CARRYING OUT THE INVENTION

Hereinafter, the present invention will be described in more detail by way of Examples with reference to the accompanying drawings. However, the following Examples are provided for illustrative purposes only and are not intended to limit the scope of the present invention, and various modifications and changes may be made by those skilled in the art without departing from the scope of the present invention.

### <Example 1>

### Preparation of Hollow Fiber Membrane

Polysulfone was used as a main polymer, and polyvinylpyrrolidone (PVP) and propylene glycol were dissolved as additives in an N-methyl-2-pyrrolidone (NMP) solvent to prepare a spinning dope. The viscosity of the prepared spinning dope was measured to be 2,000 cps at 25°C.

The internal coagulant (or bore fluid) was composed of a mixed solvent of water and N-methyl-2-pyrrolidone (NMP), and the mixing ratio of water to NMP was set to 10:90 by weight. Such a composition was selected to optimize formation of internal pores and structural control of the hollow fiber membrane.

The spinning dope and the internal coagulant were extruded through a spinneret having a double-tubular nozzle into an external coagulant, thereby preparing the hollow fiber membrane. The external coagulant was composed of a mixture of water and NMP and induced coagulation of the spinning dope during the spinning process.

The nozzle diameters of the spinneret used in the present invention, based on the diameters of the discharge ports of the spinneret, were set to Φ400 µm (inner nozzle) and Φ1,200 µm (outer nozzle), respectively. A distance between the spinneret and the external coagulant was maintained at 15 cm to control a phase separation rate of the spinning dope. The temperature of the coagulation bath was maintained at 35°C to promote uniform coagulation and structural formation.

### <Example 2>

### Preparation of Polyurethane Dispersion (PUD)

A reactor was set under a nitrogen (N₂) atmosphere to prevent oxidation. The reaction conditions were maintained at a temperature of 60 to 80°C with a stirring speed of 700 to 800 rpm.

First, 1,000 g of a polycarbonate diol having a molecular weight of 1,000 g/mol and 244 g of an isophorone diisocyanate (IPDI) (aliphatic isocyanate) were charged into a reactor to set the NCO/OH molar ratio to 1.1.

For initial synthesis, 370 g of methyl ethyl ketone (MEK) was added as a solvent.

Subsequently, dimethylolpropionic acid (DMPA) was added to the polyurethane dispersion (PUD) at 70°C to introduce hydrophilic groups (-COOH) into a polymer structure, and the mixture was sufficiently stirred to ensure a uniform reaction. A bismuth catalyst (concentration: 0.05 to 0.1%) was added to control a reaction rate, and an NCO content was measured by the dibutylamine method to confirm completion of the reaction.

Thereafter, 101.2g of triethylamine (TEA) was added to dimethylolpropionic acid (DMPA) as a neutralizing agent at 40 to 50°C to neutralize carboxylic acid groups of dimethylolpropionic acid (DMPA), thereby adjusting the pH of the reaction solution to 7 to 8 to ensure water dispersibility of the polyurethane dispersion (PUD).

Next, Distilled water was gradually added while stirring 1,479.4g of the prepared prepolymer at 700 rpm to control a particle size to 100 nm. Dispersion stability is evaluated by checking whether particle aggregation occurs.

30g of ethylene diamine (EDA) was slowly added at 35°C to increase the molecular weight of the polymer, thereby inducing chain extension. Thereafter, the MEK used was removed by heat treatment to minimize a volatile organic compound (VOC) content.

Finally, 2,803 g of additional distilled water was added to the polyurethane dispersion (PUD) to adjust a viscosity to 150 mPa·s and a solid content to 35%.

### <Example 3>

### Preparation of UF Hollow Fiber Membrane Coated with Polyurethane Dispersion (PUD) Diluted with Distilled Water

### 3-1. Preparation of Coating Solution

10 g of the polyurethane dispersion (PUD) prepared in Example 2 was diluted with 4,500 ml of distilled water to adjust a dilution ratio to about 0.222%, thereby preparing a coating solution having a total weight of 4,510 g.

### 3-2. Coating of Hollow Fiber Membrane

300g of the hollow fiber membrane prepared in Example 1 was dipped in 4,510g of the coating solution prepared in Example 3-2 to uniformly apply the polyurethane dispersion (PUD) onto a surface of the hollow fiber membrane.

### 3-3. Drying of The Coated Hollow Fiber Membrane

The Hollow Fiber Membrane coated in Example 3-2 was dried at 70°C for 4 hours using a hot-air drying method to obtain a hollow fiber membrane coated with the polyurethane dispersion (PUD).

### <Example 4>

### Preparation of UF Hollow Fiber Membrane Coated with Polyurethane Dispersion (PUD) Diluted with Distilled Water

### 4-1. Preparation of Coating Solution

10 g of the polyurethane dispersion (PUD) prepared in Example 2 was diluted with 4,500 ml of distilled water to adjust a dilution ratio to about 0.222%, thereby preparing a coating solution having a total weight of 4,510 g.

### 4-2. Coating of Hollow Fiber Membrane

300g of the hollow fiber membrane prepared in Example 1 was dipped in 4,510g of the coating solution prepared in Example 4-1 to uniformly apply the polyurethane dispersion (PUD) onto a surface of the hollow fiber membrane.

### 4-3. Twisting and Squeezing Process of the Hollow Fiber Membrane

In order to allow the polyurethane dispersion (PUD) to uniformly penetrate into pores of the hollow fiber membrane, a twisting and squeezing process was performed manually on the UF hollow fiber membrane coated in Example 4-2.

### 4-4. Drying of The Coated Hollow Fiber Membrane

The Hollow Fiber Membrane coated in Example 4-2 was dried at 70°C for 4 hours using a hot-air drying method to obtain a hollow fiber membrane coated with the polyurethane dispersion (PUD).

### <Comparative Example 1>

### Preparation of Hollow Fiber Membrane Coated with Undiluted Polyurethane Dispersion (PUD)

A hollow fiber membrane coated with an undiluted polyurethane dispersion (PUD) was prepared in the same manner as in Example 3, except that the polyurethane dispersion (PUD) was used in its original, undiluted state without dilution with distilled water.

### <Comparative Example 2>

### Preparation of Hollow Fiber Membrane Coated with Polyurethane Dispersion (PUD) Diluted with Distilled Water

A hollow fiber membrane coated with a polyurethane dispersion (PUD) was prepared in the same manner as in Example 3, except that 5 g of polyurethane dispersion (PUD) was used to adjust the dilution ratio to about 0.111%.

### <Comparative Example 3>

### Preparation of Hollow Fiber Membrane Coated with Polyurethane Dispersion (PUD) Diluted with Distilled Water

A hollow fiber membrane coated with a polyurethane dispersion (PUD) was prepared in the same manner as in Example 3, except that 15 g of polyurethane dispersion (PUD) was used to adjust the dilution ratio to about 0.332%.

### <Comparative Example 4>

### Preparation of Hollow Fiber Membrane Coated with Polyurethane Dispersion (PUD) Diluted with Distilled Water

A hollow fiber membrane coated with a polyurethane dispersion (PUD) was prepared in the same manner as in Example 3, except that 20 g of polyurethane dispersion (PUD) as used to adjust the dilution ratio to about 0.443%.

### <Test Example 1>

### Measurement of Permeate Flux of Hollow Fiber Membranes According to Whether Polyurethane Dispersion (PUD) Coating Is Applied

In order to evaluate the effect of a polyurethane dispersion (PUD) coating layer on the flux and filtration performance of a hollow fiber membrane, a comparative experiment was conducted depending on whether the polyurethane dispersion (PUD) coating was applied. The comparison was made between a hollow fiber membrane to which no polyurethane dispersion (PUD) coating was applied (Example 1) and a hollow fiber membrane to which a polyurethane dispersion (PUD) coating was applied (Comparative Example 1). Flux measurement was carried out using a standard hydraulic pressure gauge employed for product inspection. The hydraulic pressure conditions were set to 1.5 kg/cm² (the flux at low hydraulic pressure was used to evaluate the initial performance and suitability of the hollow fiber membrane), 3 kg/cm² (the flux at intermediate hydraulic pressure is important for evaluating stability and sustained performance of the hollow fiber membrane under actual operating conditions), and 5 kg/cm² (the flux at high hydraulic pressure was used to test the maximum capacity and durability of the hollow fiber membrane). Tap water was used as the test solution in the flux measurement, and the permeate flux was measured under each hydraulic pressure condition. The results are shown in Table 1 below.

The unit "LMH (L/m²·h)" shown in Table 1 below represents the permeation flux of the hollow fiber membrane and refers to the volume (L) passing per hour (h) per unit membrane area of 1 square meter (m²).

**[Table 1]**

| Case | Hydraulic pressure (kg/cm²) | Permeate flux (LMH) | Appropriate operating flux (LMH) |
|---|---|---|---|
| Example 1 (without PUD coating) | 1.5 | 200 | 100-300 |
| | 3.0 | 400 | 200-500 |
| | 5.0 | 550 | 400-700 |
| Comparative Example 1 (with PUD coating) | 1.5 | 5.26 | 100-300 |
| | 3.0 | 11.6 | 200-500 |
| | 5.0 | 21.6 | 400-700 |

As can be seen from Table 1 above, Example 1 (before application of the PUD coating) exhibited flux values outside the appropriate operating flux range according to the applied hydraulic pressure, whereas Comparative Example 1 (after coating with undiluted PUD) showed results far below the appropriate operating flux range under the same hydraulic pressure conditions. This indicates that coating the hollow fiber membrane with the polyurethane dispersion (PUD) in its undiluted form results in substantial blockage of most of the pores of the hollow fiber membrane.

### <Test Example 2>

### Evaluation of Flux and Filtration Performance of Hollow Fiber Membrane According to Dilution Ratio of Polyurethane Dispersion (PUD) Coating Layer

In order to evaluate the effect of a polyurethane dispersion (PUD) coating layer on the flux and filtration performance of a hollow fiber membrane, a comparative experiment was conducted depending on the dilution ratio of the polyurethane dispersion (PUD) to distilled water. The comparison was made among a hollow fiber membrane having a dilution ratio of about 0.222% (Example 3), a hollow fiber membrane having a dilution ratio of about 0.111% (Comparative Example 2), a hollow fiber membrane having a dilution ratio of about 0.332% (Comparative Example 3), and a hollow fiber membrane having a dilution ratio of about 0.443% (Comparative Example 4). Flux measurement was carried out using a standard hydraulic pressure gauge employed for product inspection. The hydraulic pressure conditions were set to 1.5 kg/cm² (the flux at low hydraulic pressure was used to evaluate the initial performance and suitability of the hollow fiber membrane), 3 kg/cm² (the flux at intermediate hydraulic pressure is important for evaluating stability and sustained performance of the hollow fiber membrane under actual operating conditions), and 5 kg/cm² (the flux at high hydraulic pressure was used to test the maximum capacity and durability of the hollow fiber membrane). Tap water was used as the test solution in the flux measurement, and the permeate flux was measured under each hydraulic pressure condition. The results are shown in Table 2 below.

**[Table 2]**

| Case | Hydraulic pressure (kg/cm²) | Permeate flux (LMH) | Appropriate operating flux (LMH) |
|---|---|---|---|
| Example 3 (PUD 10g) | 1.5 | 85 | 100-300 |
| | 3.0 | 170 | 200-500 |
| | 5.0 | 350 | 400-700 |
| Comparative Example 2 (PUD 5g) | 1.5 | 310 | 100-300 |
| | 3.0 | 550 | 200-500 |
| | 5.0 | 740 | 400-700 |
| Comparative Example 3 (PUD 15g) | 1.5 | 15 | 100-300 |
| | 3.0 | 100 | 200-500 |
| | 5.0 | 200 | 400-700 |
| Comparative Example 4 (PUD 20g) | 1.5 | 0 | 100-300 |
| | 3.0 | 70 | 200-500 |
| | 5.0 | 110 | 400-700 |

As can be seen from Table 2 above, Comparative Example 2, Comparative Example 3 and Comparative Example 4 exhibited flux values outside the appropriate operating flux range according to the applied hydraulic pressure, whereas Example 3 showed results of a flux somewhat smaller than the appropriate operating flux range under the same hydraulic pressure conditions. This is intended, as originally contemplated, to partially block the pores of the hollow fiber membrane so as to maximize the filtration effect for foreign substances (e.g., heavy metals).

In addition, in evaluating the effect of changes in the dilution ratio of the polyurethane dispersion (PUD) coating layer on the physical performance of the hollow fiber membrane, it was found that diluting the polyurethane dispersion (PUD) with distilled water is preferable to using the polyurethane dispersion (PUD) in its undiluted form. A dilution ratio providing the most favorable performance was determined to be water : polyurethane dispersion (PUD) = 4,500 mL : 10 g.

### <Test Example 3>

### Effect of Polyurethane Dispersion (PUD) Coating Layer on Flux and Filtration Performance of Hollow Fiber Membrane: Evaluation of Squeezing Effect

In order to evaluate the effect of a polyurethane dispersion (PUD) coating layer on the flux and filtration performance of a hollow fiber membrane, a comparative experiment was conducted depending on the presence and absence of the squeezing of a hollow fiber membrane (Example 3 and Example 4) in which the dilution ratio of the polyurethane dispersion (PUD) to distilled water is maintained constantly at about 0.222%.

### The experimental conditions were as follows:

■ Example 3: Hollow fiber membrane having a dilution ratio of about 0.222%, without performing a twisting and squeezing step.
■ Example 4: Hollow fiber membrane having a dilution ratio of about 0.222%, after performing a twisting and squeezing step.

Flux measurement was carried out using a standard hydraulic pressure gauge employed for product inspection. The hydraulic pressure conditions were set to 1.5 kg/cm² (the flux at low hydraulic pressure was used to evaluate the initial performance and suitability of the hollow fiber membrane), 3 kg/cm² (the flux at intermediate hydraulic pressure is important for evaluating stability and sustained performance of the hollow fiber membrane under actual operating conditions), and 5 kg/cm² (the flux at high hydraulic pressure was used to test the maximum capacity and durability of the hollow fiber membrane). Tap water was used as the test solution in the flux measurement, and the permeate flux was measured under each hydraulic pressure condition. The results are shown in Table 3 below.

**[Table 3]**

| Case | Hydraulic pressure (kg/cm²) | Permeate flux (LMH) | Appropriate operating flux (LMH) |
|---|---|---|---|
| Example 3 (Squeezing: X) | 1.5 | 85 | 100-300 |
| | 3.0 | 170 | 200-500 |
| | 5.0 | 350 | 400-700 |
| Example 4 (Squeezing: O) | 1.5 | 80 | 100-300 |
| | 3.0 | 164 | 200-500 |
| | 5.0 | 330 | 400-700 |

As can be seen from Table 3, the flux of Example 4, which included the twisting and squeezing step, was lower than that of Example 3, which did not include the twisting and squeezing step. This is believed to be because, through the twisting and squeezing step, the polyurethane dispersion (PUD) coating solution more uniformly penetrated into the pores of the hollow fiber membrane, thereby reducing the pore size.

### <Test Example 4>

### Evaluation of Glass Transition Temperature (Tg) and Blocking of Polyurethane Dispersion (PUD) Coating Layer

In the present invention, a polyurethane dispersion (PUD) having elasticity and a low glass transition temperature (Tg) was designed using a polycarbonate diol. In addition, IPDI was further applied to impart non-yellowing characteristics while maintaining a low glass transition temperature (Tg). After applying the polyurethane dispersion (PUD) to coat the hollow fiber membrane, it was evaluated whether tackiness occurred between the coated hollow fiber membranes.

The experiment was conducted by naked-eye visual observation under the following four hollow fiber membrane conditions:
■ Example 3: Hollow fiber membrane having a dilution ratio of about 0.222%, without performing a twisting and squeezing step.
■ Example 4: Hollow fiber membrane having a dilution ratio of about 0.222%, after performing a twisting and squeezing step.
■ Comparative Example 1: Hollow fiber membrane coated with an undiluted PUD
■ Comparative Example 4: Hollow fiber membrane having a dilution ratio of about 0.443%

The results are shown in Table 4 below.

**[Table 4]**

| **Case** | **Observation results** |
|---|---|
| Example 3 | slight blocking |
| Example 4 | slight blocking |
| Comparative Example 1 | very severe blocking |
| Comparative Example 4 | severe blocking |

As can be seen from Table 4 above, in Comparative Example 1 and Comparative Example 4, blocking between hollow fiber membranes occurred in the hollow fiber membrane coated with an undiluted polyurethane dispersion (PUD) (Comparative Example 1) and in the hollow fiber membrane coated at a dilution ratio of about 0.443% (Comparative Example 4). This suggests that when the dilution ratio is excessively low or excessively high, blocking is induced due to limitations in controlling the glass transition temperature (Tg).

In contrast, in Example 3 and Example 4, no blocking was observed in the hollow fiber membranes coated at a dilution ratio of about 0.222% (Examples 3 and 4), and the coating condition was favorable. In particular, it was confirmed that blocking was prevented even in Example 4, in which the twisting and squeezing step was performed.

These results confirm that the polyurethane dispersion (PUD) designed in the present invention, by maintaining a low glass transition temperature (Tg) through the use of the polycarbonate diol and the IPDI, contributes to preventing blocking between coated hollow fiber membranes and improving coating quality. Furthermore, this suggests that the present invention is effective in simultaneously securing filtration performance and physical stability.

### <Test Example 5>

### Evaluation of Divalent Metal Filtration Performance of Hollow Fiber Membrane Using Aqueous Magnesium Sulfate Solution

This test was conducted to evaluate the filtration performance of a hollow fiber membrane with respect to divalent metal ions (magnesium) in an aqueous magnesium sulfate (MgSO₄) solution. For this purpose, an aqueous magnesium sulfate solution having a predetermined concentration (20%) was prepared, and the solution was filtered by allowing it to pass through the hollow fiber membrane of Example 1 (before PUD coating) and the hollow fiber membrane of Example 3 (after PUD coating).

The filtration performance of the hollow fiber membrane was evaluated based on changes in electrical conductivity before and after filtration. A decrease in electrical conductivity indicates that the hollow fiber membrane effectively removed divalent metal ions (magnesium) from the aqueous solution. The electrical conductivity was measured using a total dissolved solids (TDS) meter.

The results are shown in Table 5 below.

**[Table 5]**

| Case | Electrical conductivity (mS/cm) |
|---|---|
| Aqueous magnesium sulfate solution alone | 530 |
| Example 1 | 507 |
| Example 3 | 422 |

As can be seen from Table 5, in the case of the PUD-coated hollow fiber membrane (Example 3), the electrical conductivity was the lowest, indicating that the divalent magnesium ions were filtered through the hollow fiber membrane.

### <Test Example 6>

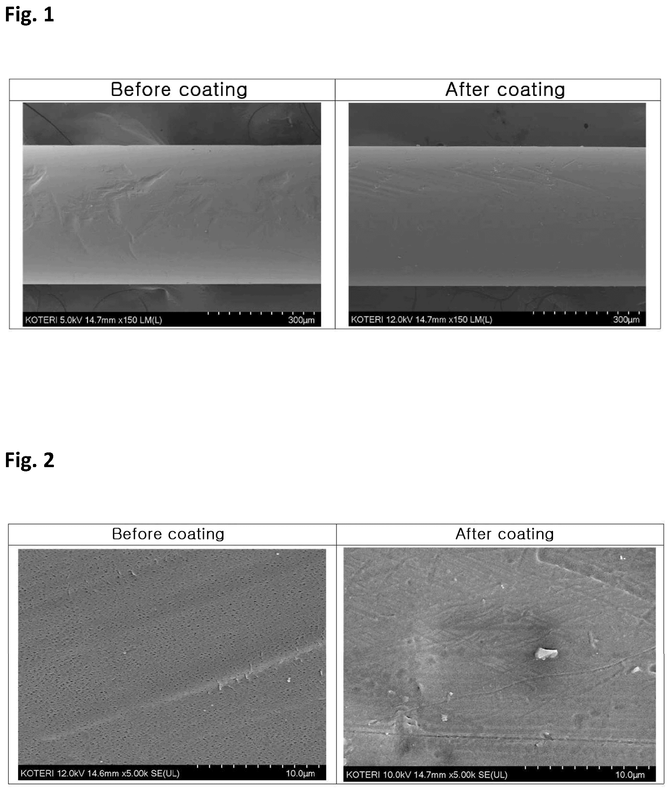

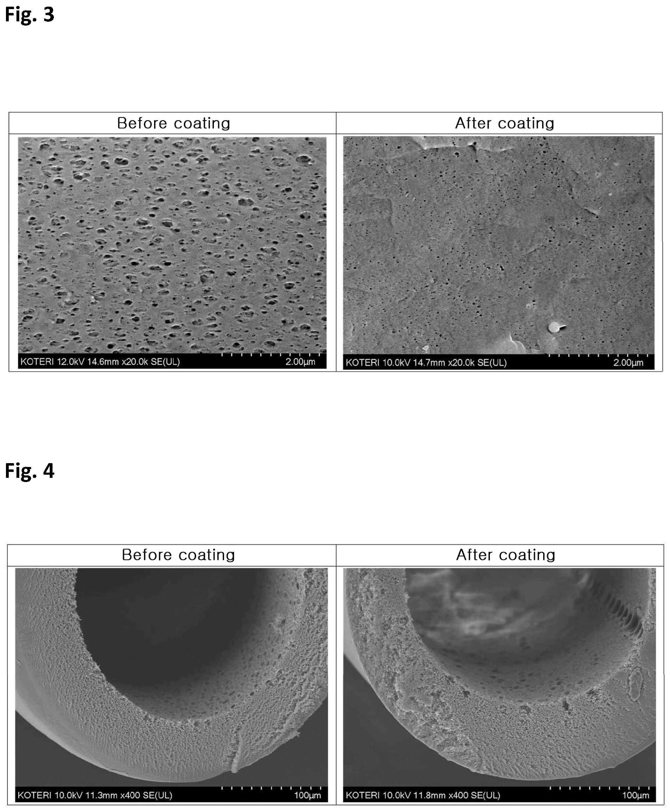

The surface morphology of the hollow fiber membrane of Example 1 (before PUD coating) and the hollow fiber membrane of Example 3 (after PUD coating) was observed using a scanning electron microscope (SEM), and the results are shown in FIG. 1 (150× magnification), FIG. 2 (500× magnification), and FIG. 3 (2,000× magnification), respectively.

As can be seen from FIG. 1, the surface of the hollow fiber membrane before coating has a relatively smooth and uniform structure, with pores widely distributed. In contrast, the surface of the hollow fiber membrane after coating shows narrowed pores due to the polyurethane dispersion (PUD) coating, and the surface is modified to be more uniform. These changes contribute to maximizing the contaminant filtration capability of the hollow fiber membrane and improving its performance as a water purifier filter.

As can be seen from FIG. 2, the surface of the hollow fiber membrane before coating contains numerous fine pores, whereas the surface of the hollow fiber membrane after coating exhibits reduced pore size. Such changes in pore structure are achieved by the polyurethane dispersion (PUD) coating, which contributes to enhancing the contaminant filtration capability when used as a water purifier filter.

As can be seen from FIG. 3, the surface of the hollow fiber membrane before coating exhibits an irregular surface structure due to the presence of numerous pores. In contrast, the surface of the hollow fiber membrane after coating shows a significantly reduced number of pores, forming a smoother and more uniform surface structure. These changes suggest that the polyurethane dispersion (PUD) coating narrows the pores of the hollow fiber membrane, thereby enhancing its contaminant filtration capability.

### <Test Example 7>

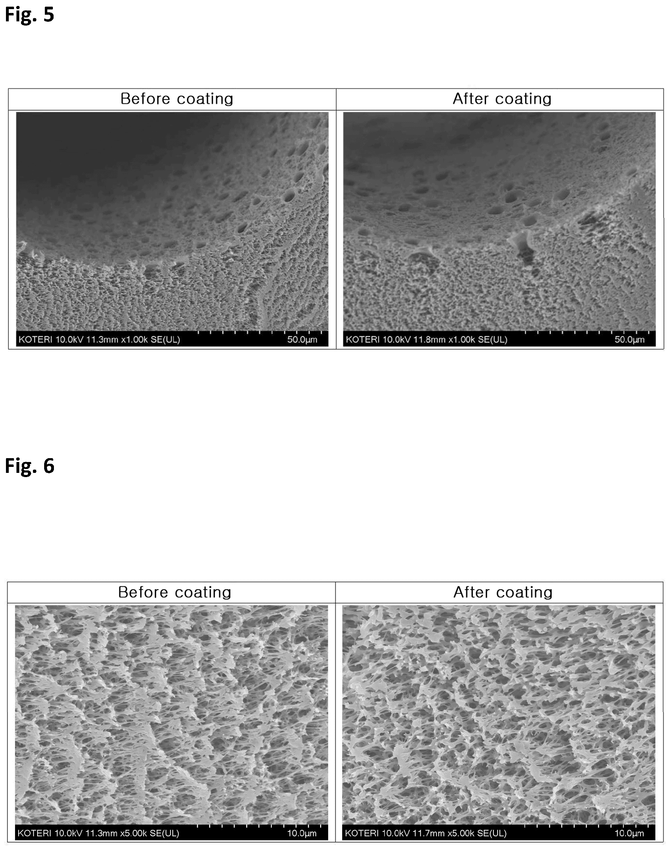

The surface morphology of the hollow fiber membrane of Example 1 (before PUD coating) and the hollow fiber membrane of Example 3 (after PUD coating) was observed using a scanning electron microscope (SEM), and the results are shown in FIG. 4 (400× magnification), FIG. 5 (1,000× magnification), and FIG. 6 (2,000× magnification), respectively.

As can be seen from FIG. 4, the surface of the hollow fiber membrane before coating has widely distributed pores. In contrast, the surface of the hollow fiber membrane after coating shows narrowed pores due to the polyurethane dispersion (PUD) coating. These changes contribute to maximizing the contaminant filtration capability of the hollow fiber membrane and improving filtration performance of the hollow fiber membrane. The surface of the hollow fiber membrane after coating has a more uniform and denser structure, which plays an important role in improving its performance as a water purifier filter.

As can be seen from FIG. 5, the hollow fiber membrane before coating has a porous structure, and the size of pores is relatively large. In contrast, the surface of the hollow fiber membrane after coating shows narrowed pores due to the polyurethane dispersion (PUD). The surface of the hollow fiber membrane after coating has a more uniform and smoother structure, which contributes to reducing clogging in a filtration process.

As can be seen from FIG. 6, the structural differences between the hollow fiber membrane before and after coating can be clearly observed. The hollow fiber membrane before coating exhibits a distinct porous structure, and the pore size is relatively large. In contrast, the hollow fiber membrane after coating shows narrowed pores due to the polyurethane dispersion (PUD) coating. Such reduction in pore size enhances the filtration performance of the hollow fiber membrane and contributes to maximizing its contaminant removal capability. The surface of the hollow fiber membrane after coating has a more uniform and denser structure, which serves as an important factor in improving its performance as a water purifier filter.

## Claims

1. A method of coating a UF hollow fiber membrane with a polyurethane dispersion (PUD) for reducing the pore size of the UF hollow fiber membrane, the method comprising the steps of:
a) synthesizing a polyurethane having high water dispersibility by reacting a polycarbonate diol with an isophorone diisocyanate (IPDI) so as to obtain a polyurethane dispersion (PUD);
b) diluting the polyurethane dispersion (PUD) obtained in step a) with distilled water to form a coating solution applicable to the UF hollow fiber membrane;
c) coating the coating solution of step b) onto a surface of the UF hollow fiber membrane, and then twisting and squeezing the coated UF hollow fiber membrane; and
d) fixing the coated UF hollow fiber membrane in step c) using hot air.

2. The method of claim 1, wherein step b) comprises diluting the polyurethane dispersion (PUD) with distilled water at a weight ratio of 1:450 to improve coating performance.

3. The method of claim 1, wherein the polyurethane dispersion (PUD) of step b) has a low glass transition temperature (Tg) to prevent blocking between coated UF hollow fiber membranes and to improve coating quality.

4. A UF hollow fiber membrane prepared by the method of claim 1, the membrane being coated with a polyurethane dispersion (PUD).

5. A UF hollow fiber membrane prepared by the method of claim 2, the membrane being coated with a polyurethane dispersion (PUD).

6. A UF hollow fiber membrane prepared by the method of claim 3, the membrane being coated with a polyurethane dispersion (PUD).
